# EUROPÄISCHE PATENTSCHRIFT

(11) **EP 2 965 044 B1**
(45) Veröffentlichungstag und Bekanntmachung des Hinweises auf die Patenterteilung: **18.09.2019**
(21) Anmeldenummer: 13807890.2
(22) Anmeldetag: 05.12.2013
(51) Int. Cl.: G01D 11/24, B61L 23/04

(54) **SCHUTZVORRICHTUNG FÜR EINE OPTISCHE SENSOREINRICHTUNG FÜR SCHIENENFAHRZEUGE**
PROTECTION DEVICE FOR AN OPTICAL SENSOR UNIT FOR RAIL VEHICLES
DISPOSITIF DE PROTECTION D'UN ÉQUIPEMENT DE DÉTECTION OPTIQUE POUR VÉHICULES FERROVIAIRES

(30) Priorität: 06.03.2013 DE 202013100973 U
(43) Veröffentlichungstag der Anmeldung: 13.01.2016
(73) Patentinhaber: HaslerRail AG, 3018 Bern (CH)
(72) Erfinder: RIBAUX, Stephan Edouard, CH-3148 Lanzenhäusern (CH); SCHREINER, Thorsten, 35578 Wetzlar (DE)
(74) Vertreter: Keller & Partner Patentanwälte AG
(86) Internationale Anmeldenummer: PCT/CH2013/000213
(87) Internationale Veröffentlichungsnummer: WO 2014/134743

(56) Entgegenhaltungen:
- CN-Y- 2 187 164
- CN-Y- 2 867 387
- DE-B3-102011 050 255
- GB-A- 1 255 062
- JP-A- H1 010 607
- JP-A- 2010 079 123
- US-A1- 2010 073 771
- US-A1- 2010 253 832
- US-A1- 2011 058 581
- US-A1- 2011 115 668

## Beschreibung

### Technisches Gebiet

Die Erfindung betrifft eine Schutzvorrichtung für eine optische Sensoreinrichtung für Schienenfahrzeuge, umfassend ein röhrenartiges Gehäuse mit einem Basisteil und einem trichterartigen Frontteil. Die Erfindung betrifft weiter eine optische Sensoreinrichtung mit einer solchen Schutzvorrichtung und ein Schienenfahrzeug mit einer derartigen optischen Sensoreinrichtung.

### Stand der Technik

Es ist bekannt, optische Sensoren einzusetzen, um die Geschwindigkeit von Schienenfahrzeugen gegenüber der Schiene zu bestimmen. Dazu wird ein Sensor derart am Schienenfahrzeug angebracht, dass er von der Schiene zurückgeworfene Lichtstrahlen (im sichtbaren, Infrarot- und/oder UV-Bereich) erfassen kann. Üblicherweise ist eine ebenfalls am Schienenfahrzeug angeordnete Lichtquelle vorhanden, welche den vom Sensor erfassten Abschnitt der Schiene, insbesondere die Lauffläche, mit geeignetem Licht beleuchtet. Der Sensor und die Lichtquelle sind üblicherweise durch ein Schutzglas bzw. zwei gesonderte Schutzgläser vor Umgebungseinwirkungen geschützt.

Das vom Sensor erfasste optische Signal wird umgewandelt und in einer nachfolgenden Stufe ausgewertet. Es sind verschiedene Verfahren bekannt, um ausgehend vom optischen Signal die Geschwindigkeit des Schienenfahrzeugs zu ermitteln.

Unabhängig vom verwendeten Verfahren besteht dabei immer das Problem, dass das Schutzglas verschmutzen kann, wodurch die Transmission der ausgesandten und von der Schiene reflektierten Lichtstrahlen reduziert wird. Dies führt zu einem schwächeren Sensorsignal und damit zu einem schlechteren Signal-Rausch-Verhältnis. Bei starker Verschmutzung kann die Transmission derart reduziert sein, dass das Signal gar nicht mehr feststellbar ist. Je nach Art der Weiterverarbeitung kann eine Verschmutzung des Schutzglases die Erfassung der reflektierten Lichtstrahlen nicht nur quantitativ, sondern auch hinsichtlich der Bildqualität beeinträchtigen.

Aufgrund der Anbringung der optischen Sensoren an der Unterseite des Schienenfahrzeugs ist eine Reinigung des Schutzglases aufwendig. Es wird deshalb ein möglichst langes Reinigungsintervall angestrebt. Entsprechend, soll eine Verschmutzung des Sensors nach Möglichkeit von Vornherein vermieden werden. Zu diesem Zweck sind Schutzvorrichtungen bekannt, die zwischen dem Schutzglas und der Schiene angeordnet sind. Sie umfassen ein röhrenartiges Gehäuse mit einem dem Sensor zugewandten Basisteil und einem der Schiene zugewandten trichterartigen Frontteil. Als röhrenartiges Gehäuse wird im vorliegenden Zusammenhang ein im Wesentlichen formstabiles Gebilde verstanden, welches eine durchgängige Öffnung aufweist, durch welche Lichtstrahlen zwischen Schiene und Sensor (und ggf. zwischen Lichtquelle und Schiene) passieren können.

Bei der Dimensionierung des Gehäuses ist zu beachten, dass ein längeres Gehäuse das Schutzglas des Sensors in der Regel besser vor einer Verschmutzung schützt als ein kürzeres. Gleichzeitig werden aber auch die möglichen Strahlengänge für die Lichtstrahlen eingeschränkt, so dass längere Gehäuse bzw. zumindest deren trichterartiger Frontteil mit grösserem Querschnitt ausgeführt werden müssen als kurze Gehäuse. Ferner ist zu beachten, dass in der Regel ein besseres Signal erhalten werden kann, wenn sich der Sensor nahe an der Schiene befindet, das Gehäuse muss aber - wie alle auf der Unterseite des Schienenfahrzeugs angeordneten Komponenten - einen vorgeschriebenen Mindestabstand zur Schiene haben, es darf in ein gewisses Lichtraumprofil oberhalb der Schiene nicht eingreifen. Ferner dürfen sich die Gehäuse auch in seitlicher Richtung nicht über ein vorgeschriebenes Mass hinaus erstrecken. Diese Erfordernisse sprechen tendenziell für kurze Gehäuse, die wiederum eine schlechtere Wirkung gegen Verschmutzungen des Schutzglases haben.

Die bekannten Schutzvorrichtungen stellen somit stets einen Kompromiss zwischen einer guten Schutzwirkung vor Verschmutzung und einer hohen erzielbaren Signalqualität dar.

### Darstellung der Erfindung

Aufgabe der Erfindung ist es, eine dem eingangs genannten technischen Gebiet zugehörende Schutzvorrichtung zu schaffen, welche eine gute Schutzwirkung vor Verschmutzung bei hoher Signalqualität ermöglicht.

Die Lösung der Aufgabe ist durch die Merkmale des Anspruchs 1 definiert. Gemäss der Erfindung ist im Bereich eines maximalen Aussenquerschnitts des Gehäuses in einer Ebene senkrecht zu einer Rohrachse des Gehäuses eine erste Ausdehnung grösser als eine zweite Ausdehnung, welche zur ersten Ausdehnung senkrecht steht. Als Rohrachse wird im vorliegenden Zusammenhang eine Symmetrieachse oder zentrale Achse durch die Öffnung des Gehäuses verstanden, welches eine durchgängige Öffnung aufweist, durch welche Lichtstrahlen zwischen Schiene und Sensor (und ggf. zwischen Lichtquelle und Schiene) passieren können.

Bei der Dimensionierung des Gehäuses ist zu beachten, dass ein längeres Gehäuse das Schutzglas des Sensors in der Regel besser vor einer Verschmutzung schützt als ein kürzeres. Gleichzeitig werden aber auch die möglichen Strahlengänge für die Lichtstrahlen eingeschränkt, so dass längere Gehäuse bzw. zumindest deren trichterartiger Frontteil mit grösserem Querschnitt ausgeführt werden müssen als kurze Gehäuse. Ferner ist zu beachten, dass in der Regel ein besseres Signal erhalten werden kann, wenn sich der Sensor nahe an der Schiene befindet, siehe z.B. die US 2011/0115668, das Gehäuse muss aber - wie alle auf der Unterseite des Schienenfahrzeugs angeordneten Komponenten - einen vorgeschriebenen Mindestabstand zur Schiene haben, es darf in ein gewisses Lichtraumprofil oberhalb der Schiene nicht eingreifen. Ferner dürfen sich die Gehäuse auch in seitlicher Richtung nicht über ein vorgeschriebenes Mass hinaus erstrecken. Diese Erfordernisse sprechen tendenziell für kurze Gehäuse, die wiederum eine schlechtere Wirkung gegen Verschmutzungen des Schutzglases haben.

Die bekannten Schutzvorrichtungen stellen somit stets einen Kompromiss zwischen einer guten Schutzwirkung vor Verschmutzung und einer hohen erzielbaren Signalqualität dar.

Weiter sind Streulichtschutzvorrichtungen für optische Kameras bekannt, beispielsweise aus der CN 2 867 387 Y (Julong Software Engineering), wo Spiegelungen an Fenstern vermieden werden sollen, oder der GB 1 255 062 (NASA), die sich speziell auf die Anwendung an Kameras auf Satelliten bezieht, bekannt. Die US 2011/058581 A1 (Nobis Günter et al.) schliesslich schützt die Umgebung vor Laserstrahlen die an einem ruhenden Messstand eingesetzt werden.

### Darstellung der Erfindung

Aufgabe der Erfindung ist es, eine dem eingangs genannten technischen Gebiet zugehörende Schutzvorrichtung zu schaffen, welche eine gute Schutzwirkung vor Verschmutzung bei hoher Signalqualität ermöglicht.

Der Umfang der Erfindung wird durch die Ansprüche bestimmt.

Die Lösung der Aufgabe ist durch die Merkmale des Anspruchs 1 definiert. Gemäss der Erfindung ist im Bereich eines maximalen Aussenquerschnitts des Gehäuses in einer Ebene senkrecht zu einer Rohrachse des Gehäuses eine erste Ausdehnung grösser als eine zweite Ausdehnung, welche zur ersten Ausdehnung senkrecht steht. Als Rohrachse wird im vorliegenden Zusammenhang eine Symmetrieachse oder zentrale Achse durch die Öffnung des Gehäuses verstanden.

Das Gehäuse ist also insbesondere nicht, wie aus dem Stand der Technik bekannt, kreissymmetrisch, sondern weist eine Breite auf, die geringer ist als die Länge des Gehäuses (wobei mit Breite und Länge die Ausdehnungen des Gehäuses in einer Ebene bezeichnet werden sollen, die im Wesentlichen senkrecht steht zur Rohrachse).

Eine optische Sensoreinrichtung für Schienenfahrzeuge, welche von der Lehre der Erfindung Gebrauch macht, umfasst also ein Sensorgehäuse und mindestens eine solche Schutzvorrichtung, welche am Sensorgehäuse befestigt ist. Darunter fallen auch Sensoreinrichtungen, bei welchen das Gehäuse für den Sensor (und ggf. die Beleuchtung) einstückig mit der Schutzvorrichtung ausgebildet ist.

Die Sensoreinrichtung ist nun mit Vorteil derart am Schienenfahrzeug und die Schutzvorrichtung derart an der Sensoreinrichtung angebracht, dass sich die erste Ausdehnung im Wesentlichen senkrecht zu einer Radachse von Laufrädern des Schienenfahrzeugs erstreckt, also im Betrieb des Schienenfahrzeugs im Wesentlichen parallel zur Schiene (d. h. in Fahrtrichtung). Durch die erfindungsgemässe Geometrie wird also der Platzbedarf in Querrichtung reduziert, ohne dass der Strahlengang in Längsrichtung beschränkt wird. Die Lichtquelle und der Sensor lassen sich somit in Fahrtrichtung hintereinander anordnen, und der Strahlengang verläuft im Wesentlichen in einer Vertikalebene parallel zur Schiene.

Es hat sich gezeigt, dass diese Anordnung eine gute Signalqualität ermöglicht, aufgrund der erfindungsgemässen Geometrie ist gleichzeitig auch ein guter Schutz gegen Verschmutzungen des Schutzglases möglich.

Bevorzugt beträgt die erste Ausdehnung mindestens das 1.2-fache der zweiten Ausdehnung, bevorzugt mindestens das 1.33-fache. Es hat sich gezeigt, dass eine entsprechende Geometrie die Erfordernisse hinsichtlich der mechanischen Stabilität des Gehäuses, der Reduktion des Platzbedarfs in der schmaleren Richtung und der Erfassung der reflektierten Strahlung zu erfüllen vermag.

Mit Vorteil besitzt der Aussenquerschnitt des Gehäuses senkrecht zur Rohrachse entlang des Basisteils und des trichterartigen Frontteils eine elliptische Form.

Diese Form ermöglicht eine hohe mechanische Stabilität und gute optische Eigenschaften bei wirtschaftlichem Fertigungsaufwand.

Bevorzugt beträgt somit ein Verhältnis zwischen den Längen von Haupt- und Nebenachse der Ellipse mindestens 1.2, bevorzugt mindestens 1.33. Mit Vorteil ist das Verhältnis über den gesamten Basisteil und den gesamten trichterartigen Frontteil konstant.

Alternativ ist nur der Trichter im Querschnitt elliptisch, und der Basisteil hat die Form eines Kreiszylinders. Wieder andere Ausführungen sehen andere Querschnitte vor, z. B. rechteckige oder andersartig polygonale.

Bevorzugt umfasst der Frontteil einen Innentrichter und einen Aussentrichter, wobei sich ein Querschnitt des Innentrichters in Richtung Frontöffnung verringert und sich ein Querschnitt des Aussentrichters in Richtung Frontöffnung vergrössert. Der Innentrichter und der Aussentrichter schliessen somit einen sich in Richtung der Frontöffnung erweiternden Raum mit ringförmigem Querschnitt ein. Das hintere Ende des Innentrichters fällt dabei vorzugsweise mit dem Übergang zwischen Basisteil und Frontteil, also mit dem hinteren Ende des Aussentrichters zusammen, es kann aber auch axial weiter hinten und insbesondere axial weiter vorne positioniert sein.

Es hat sich überraschenderweise gezeigt, dass die Kombination eines Innen- und eines Aussentrichters gegenüber einem einfachen sich zur Frontöffnung hin erweiternden Trichter zu einer wesentlichen Verbesserung der Schutzwirkung gegen eine Verschmutzung des Schutzglases führt. Diese Wirkung tritt grundsätzlich auch dann ein, wenn eine symmetrische Geometrie vorliegt, also nicht der erfindungsgemässe Unterschied zwischen Länge und Breite vorhanden ist. Es hat sich jedoch gezeigt, dass der positive Effekt der Kombination Innen-/Aussentrichter durch die erfindungsgemässe Geometrie nicht beeinträchtigt wird. Die Kombination beider Massnahmen ermöglicht deshalb eine besonders gute Schutzwirkung bei minimaler Beeinträchtigung der optischen Eigenschaften.

Eine gute Abschirmung des Messfelds von durch den Luftstrom transportierten Schmutz-, Staub-, Regen- und Schneepartikeln garantiert eine eindeutige und zuverlässige Geschwindigkeitsmessung mittels der optischen Sensoreinrichtung.

Bevorzugt beträgt in einem axialen Querschnitt ein Winkel zwischen Innentrichter und Aussentrichter 40 - 70°, bevorzugt 45 - 65°. Bei den Trichtern handelt es sich mit Vorteil um gerade Konen, so dass der Winkel über den gesamten Frontteil konstant ist. Der Winkel zwischen Rohrachse und Innentrichter ist dabei bevorzugt grösser als der Winkel zwischen Rohrachse und Aussentrichter. In einer bevorzugten Ausführungsform beträgt der Winkel zwischen Rohrachse und Innentrichter beispielsweise 40 - 50°.

Andere Winkel sind möglich, insbesondere können kleinere Winkel gewählt werden, wenn die axiale Ausdehnung sowohl des Innen- als auch des Aussentrichters besonders lang gewählt wird.

Mit Vorteil ist der Innentrichter durch einen metallischen Einsatz gebildet. Als Material kommt beispielsweise rostfreier Stahl in Frage. Es hat sich gezeigt, dass diese Materialwahl einen strömungstechnisch günstigen und dauerhaften Aufbau ermöglicht und zwar auch bei den verhältnismässig starken mechanischen Einflüssen wie sie beispielsweise durch das Anhaften von Schnee erzeugt werden. Vorzugsweise wird der metallische Einsatz zusammen mit dem röhrenartigen Gehäuse vergossen. Es erübrigen sich so zusätzliche Befestigungselemente und der metallische Einsatz verbessert die mechanische Stabilität des Gehäuses.

Alternativ ist der Innentrichter durch ein anderes Material gebildet und z. B. einstückig mit dem Basisteil und/oder dem Frontteil ausgebildet.

Mit Vorteil übersteigt das Verhältnis zwischen der Länge der mündungsseitigen Öffnung des Innentrichters zur axialen Höhe des Innentrichters den Wert 4.25 nicht, damit eine effiziente Schmutzabweisung gewährleistet ist.

Es hat sich gezeigt, dass sich besonders gute schmutzabweisende Eigenschaften ergeben, wenn der Innentrichter in axialer Richtung über den Aussentrichter hinausragt. Insbesondere ragt der Innentrichter mindestens mit einem Drittel seiner axialen Ausdehnung über den Aussentrichter hinaus.

Alternativ kann das vordere, der Frontöffnung zugewandte Ende des Innentrichters in derselben Ebene liegen wie das vordere Ende des Aussentrichters oder gar zurückversetzt sein.

Bevorzugt ist an einem Übergang zwischen Basisteil und trichterartigem Frontteil ein Innenkonus ausgebildet. Dieser trennt einen vorderen Teil des Innenraums des röhrenartigen Gehäuses von einem hinteren Teil und sorgt dafür, dass sich ein Grossteil der in das Gehäuse eingedrungenen Partikel bereits im vorderen Teil absetzt.

Mit Vorteil ist angrenzend an einen Befestigungsbereich für die optische Sensoreinrichtung ein zentrales Innenrohr angeordnet, dessen Wandung in einer dem Befestigungsbereich abgewandten Richtung von einer Wandung des Basisteils der Schutzvorrichtung beabstandet ist. Die Form des Innenrohrs entspricht mit Vorteil der Form des Basisteils, der Querschnitt ist aber verringert. Das Innenrohr und der Basisteil sind bevorzugt konzentrisch angeordnet. Das Innenrohr bietet einen zusätzlichen Schutz vor Verschmutzung der Sensoreinrichtung. Ein Grossteil des bis in den Bereich des Innenrohrs vordringenden Schmutzes gelangt in den Bereich zwischen dem Innenrohr und der Wandung des Basisteils und setzt sich dort ab.

Das Innenrohr ist bevorzugt fest und abgedichtet an einem Sensorgehäuse der Sensoreinrichtung befestigt oder mit diesem einstückig ausgebildet. So ist auch bei minimalen Innenrohrdimensionen, welche eng an das Mess- und Beleuchtungsfeld angepasst sind, sichergestellt, dass keine Abschattung des Sensors stattfindet. Das Innenrohr ist aus demselben Grund mit Vorteil aus einem starren Material hergestellt, z. B. einer Aluminiumlegierung wie AlMgSi1.

Die Wandung des Innenrohrs kann mindestens eine Durchströmöffnung umfassen. Diese bewirkt im Innenrohr einen von der Sensoreinrichtung weg gerichteten Luftstrom, welcher in das Innenrohr eindringende Partikel erfasst und aus dem Innenrohr hinaus bläst. Mit Vorteil ist die Durchströmöffnung im Wesentlichen umlaufend ausgebildet, so dass ein Luftstrom erzeugt wird, welcher den gesamten vom Innenrohr umschlossenen Bereich möglichst vollständig erfasst. Ebenfalls vorteilhaft ist es, wenn im Bereich der Durchströmöffnung ein Leitkanal ausgebildet ist, dessen Achse schräg zur Längsachse des Innenrohrs geneigt ist, wobei der Leitkanal von hinten (d. h. sensorseitig) aussen nach vorne (d. h. mündungsseitig) innen verläuft.

Mit Vorteil ist das Gehäuse aus einem flexiblen Material, insbesondere aus einem Elastomer, gefertigt. Geeignet ist beispielsweise ein Synthesekautschuk wie Chloropren-Kautschuk oder Ethylen-Propylen-Dien-Kautschuk (EPDM), die Härte beträgt beispielsweise zwischen 60 und 80 Shore A. Ein aus einem solchen Material gefertigtes Gehäuse ist im Wesentlichen formstabil, kann sich aber bei einer mechanischen Einwirkung verformen und kehrt nach dem Ende der mechanischen Einwirkung wieder in seine ursprüngliche Form zurück. Durch Einsatz geeigneter Elastomere lässt sich das Gehäuse mit geringem Gewicht ausbilden, es ist zudem wenig anfällig auf Umwelteinflüsse wie Frost oder Feuchtigkeit. Je nach geltenden Vorschriften ist es zudem möglich, dass an der Schienenfahrzeugunterseite angeordnete flexible Elemente einen geringeren Abstand zur Schiene einnehmen dürfen als solche aus starren Materialien, dass also durch den Einsatz eines flexiblen Gehäuses der Abstand der Frontöffnung von der Schiene reduziert werden kann. Dies reduziert zum einen die Einwirkung von Streulicht, zum anderen kann der Sensor bei gleichem Schutz vor Verschmutzungen des Schutzglases näher an der Schiene platziert werden, was wie oben ausgeführt ein besseres Signal ermöglicht.

Bevorzugt umfasst der trichterartige Frontteil im Bereich der Frontöffnung einen Ring aus metallischem Material. Bei einem Doppeltrichter ist dieser insbesondere am frontseitigen Ende des Aussentrichters angeordnet, bzw. in das Material des Gehäuses eingebettet. Der Metallring verbessert die mechanische Stabilität des Gehäuses, insbesondere bei mechanischen Einflüssen wie sie beispielsweise durch das Anhaften von Schnee erzeugt werden. Wenn das Gehäuse ansonsten aus einem flexiblen Material gefertigt ist, behindert er aber die an sich gewünschte Verformbarkeit bei externen Einwirkungen kaum.

Wenn der Innentrichter als fest mit dem Frontteil verbundener metallischer Einsatz ausgebildet ist, erübrigt sich in der Regel ein zusätzlicher metallischer Ring.

Mit Vorteil umfasst das Sensorgehäuse der optischen Sensoreinrichtung einen Frontabschnitt, dessen Aussenquerschnitt dem Innenquerschnitt eines sensorseitigen Endes des Basisteils der Schutzvorrichtung entspricht, so dass der Basisteil auf den Frontabschnitt passend aufschiebbar ist. Dies ermöglicht eine einfache Befestigung der Schutzvorrichtung am Sensorgehäuse. Durch die überlappende Anordnung des Sensorgehäuses und des daran befestigten Basisteils ergibt sich eine gute Abdichtung gegen Umwelteinflüsse.

Bevorzugt ist ferner eine axiale Ausdehnung des Frontabschnitts derart, dass sich eine axiale Position der Schutzvorrichtung in Bezug auf das Sensorgehäuse verstellen lässt. Die Länge des Frontabschnitts und des Basisteils sind z. B. so, dass sich ein Verstellweg von einigen mm bis einigen cm ergibt. Dies ermöglicht eine einfache Anpassung der optischen Sensoreinrichtung an das jeweilige Schienenfahrzeug.

Vorzugsweise umfasst die Sensoreinrichtung ein umlaufendes Spannelement, welches einen auf den Frontabschnitt aufgeschobenen Bereich des Basisteils umschliesst und zur Fixierung der Schutzvorrichtung am Sensorgehäuse spannbar ist. Das Spannelement ist beispielsweise in der Art einer Schlauchschelle ausgebildet. Es ermöglicht eine einfache, sichere und flexible Verbindung zwischen Schutzvorrichtung und Sensorgehäuse.

Alternativ wird der Basisteil nicht auf das Sensorgehäuse aufgeschoben, sondern beispielsweise in dieses eingeschoben oder stirnseitig daran befestigt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schrägbild einer Sensoreinrichtung mit einer erfindungsgemässen Schutzvorrichtung und einem erfassten Schienenabschnitt;
- Fig. 2A, B: vertikale Querschnitte durch die Sensoreinrichtung entlang der Haupt- und der Nebenachse;
- Fig. 3: ein Schrägbild der Schutzvorrichtung;
- Fig. 4A, B: eine Seitenansicht der Schutzvorrichtung und einen Schnitt durch die Schutzvorrichtung in einer horizontalen Ebene;
- Fig. 5: ein Schrägbild einer Sensoreinrichtung mit einer zweiten Ausführungsform der erfindungsgemässen Schutzvorrichtung und einem erfassten Schienenabschnitt;
- Fig. 6A, 6B: vertikale Querschnitte durch die Sensoreinrichtung entlang der Haupt- und der Nebenachse;
- Fig. 7: ein Schrägbild der Schutzvorrichtung gemäss der zweiten Ausführungsform; und
- Fig. 8A, 8B: vertikale Querschnitte entlang der Haupt- und der Nebenachse einer Schutzvorrichtung gemäss einer dritten Ausführungsform.

Grundsätzlich sind in den Figuren gleiche Teile mit gleichen Bezugszeichen versehen.

### Wege zur Ausführung der Erfindung

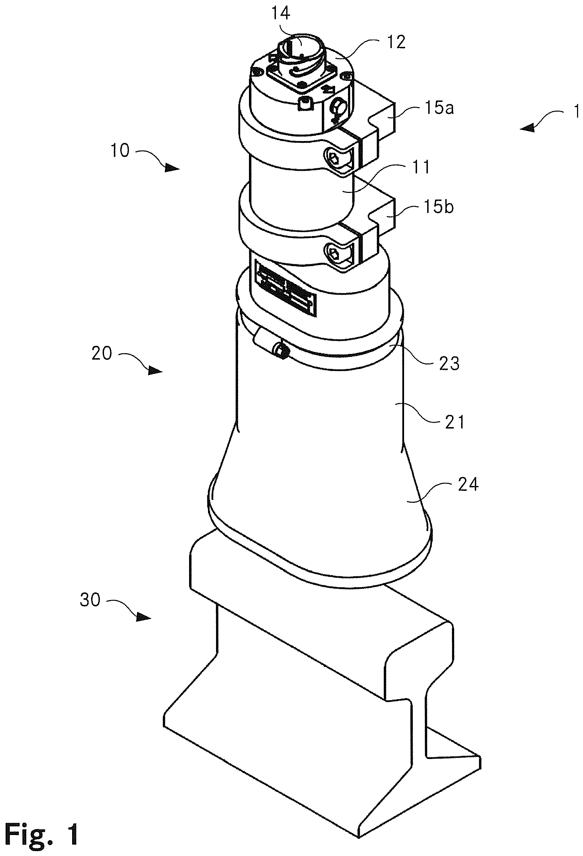

Die Figur 1 ist ein Schrägbild einer Sensoreinrichtung mit einer erfindungsgemässen Schutzvorrichtung und einem erfassten Schienenabschnitt. Die Sensoreinrichtung 1 umfasst ein Sensorgehäuse 10, an welchem die erfindungsgemässe Schutzvorrichtung 20 befestigt ist. Die Schutzvorrichtung 20 umfasst ein Gehäuse mit elliptischem Querschnitt. Die Sensoreinrichtung 1 ist derart am Schienenfahrzeug befestigt, dass die Hauptachse der Ellipse im Wesentlichen parallel ist zu einer Hauptausdehnung der erfassten Schiene 30.

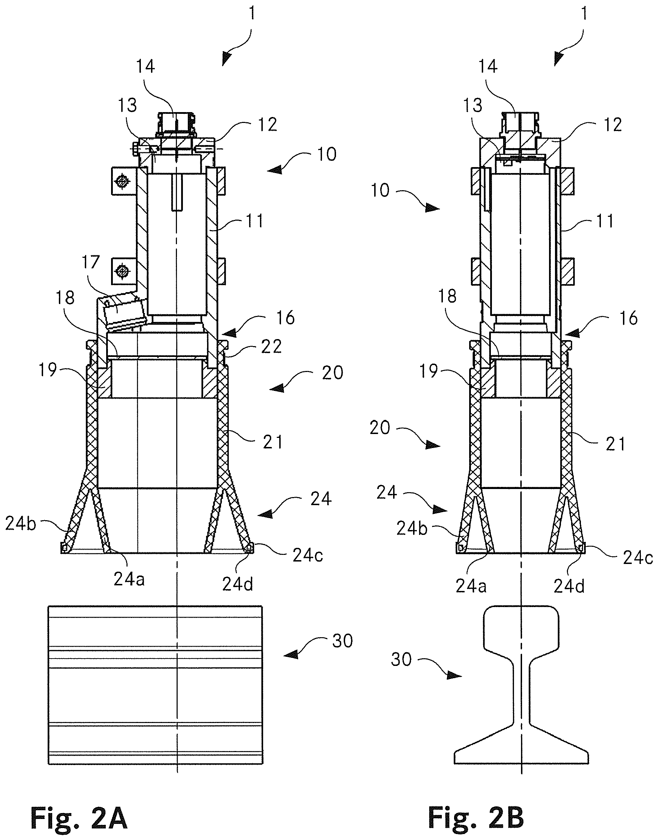

Die Figuren 2A und 2B zeigen vertikale Querschnitte durch die Sensoreinrichtung entlang der Haupt- und der Nebenachse. Das Sensorgehäuse 10 aus Aluminiumguss umfasst einen Hauptteil 11 mit einem kreisförmigen Querschnitt. An dessen hinteren, d. h. der Schiene 30 abgewandten Ende ist ein Deckel 12 angeordnet, in welchem der Sensor 13 befestigt ist. Der Sensor 13 ist mit einer Buchse 14 an der Deckelaussenseite verbunden. Die Sensoreinrichtung 1 lässt sich mit Befestigungsklemmen 15a, 15b an geeigneten Halteeinrichtungen des Schienenfahrzeugs befestigen. Nach vorne, d. h. in Richtung der erfassten Schiene 30 an den Hauptteil 11 des Sensorgehäuses 10 anschliessend ist ein Aufnahmeteil 16 gebildet. Dieser hat einen elliptischen Querschnitt, wobei eine Grenzfläche des Hauptteils 11 unmittelbar und gerade in die Grenzfläche des Aufnahmeteils 16 übergeht, während sich diametral entgegengesetzt der Durchmesser des kreisförmigen Querschnitts des Hauptteils 11 über einen konischen Übergangsabschnitt zur Hauptachse des elliptischen Querschnitts des Aufnahmeteils 16 erweitert. Der Hauptteil 11 ist also bezüglich des Aufnahmeteils 16 exzentrisch angeordnet.

Im gegenüber dem Hauptteil 11 erweiterten Abschnitt des Aufnahmeteils 16 ist eine Lichtquelle 17 aufgenommen. Diese ist schräg, anliegend an den konischen Übergangsabschnitt, im Aufnahmeteil 16 befestigt, so dass von ihr ausgesandtes Licht in einem vorgegebenen Winkel auf die Lauffläche des Kopfs der Schiene 30 trifft. Die Mündung des Aufnahmeteils 16 wird durch einen Abschnitt mit der Geometrie eines Zylinders mit elliptischer Grundfläche gebildet.

An der Mündung des Aufnahmeteils 16 ist ein Schutzglas 18 aus Borosilikatglas befestigt. Das Schutzglas 18 stützt sich über je einen elliptischen O-Ring an der hinteren Seite am Aufnahmeteil 16 und an der vorderen Seite an einem Rahmen 19 aus Aluminiumguss ab. Der Rahmen 19 ist durch mehrere umlaufend angeordnete, radial verlaufende Schrauben mit der Stirnseite des Aufnahmeteils 16 verschraubt und schliesst das Sensorgehäuse 10 nach vorne ab. Der Aussenquerschnitt des Rahmens 19 entspricht dem der Mündung benachbarten Aussenquerschnitt des Aufnahmeteils 16.

Auf dem der Mündung benachbarten Abschnitt des Aufnahmeteils 16 und auf dem daran befestigten Rahmen 19 ist die Schutzvorrichtung 20 aufgeschoben. Diese umfasst einen Hauptteil 21 mit konstantem elliptischem Querschnitt, wobei der Innenquerschnitt dem Aussenquerschnitt des Aufnahmeteils 16 und des Rahmens 19 entspricht. Im Bereich des hinteren Endes des Hauptteils 21 der Schutzvorrichtung 20 ist eine umlaufende Nut 22 ausgespart. Diese nimmt eine Spannvorrichtung 23 in der Art einer an sich bekannten Schlauchschelle auf, welche beispielsweise ein ringförmiges Metallband und eine daran befestigte Stellschraube zum Spannen der Schelle umfasst (vgl. Figur 1). Die Schutzvorrichtung 20 lässt sich somit in verschiedenen axialen Positionen am Sensorgehäuse 10 positionieren und fixieren.

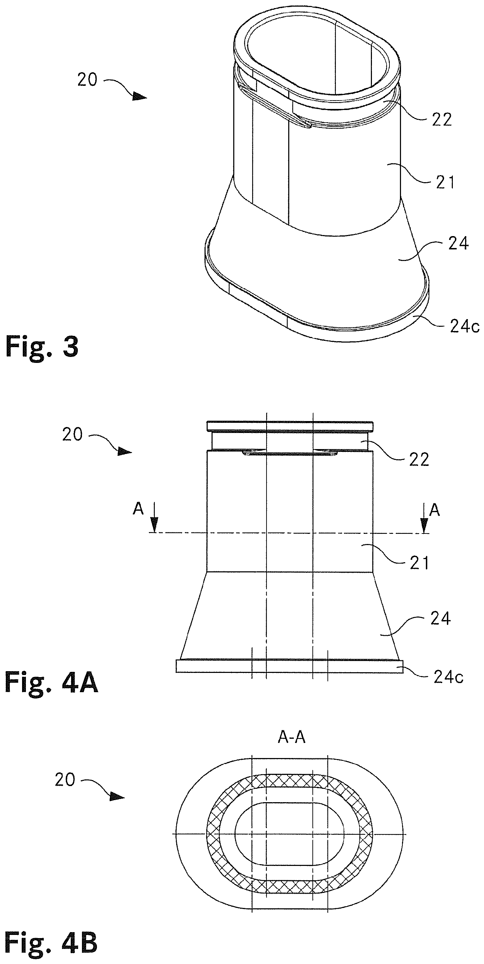

Die Schutzvorrichtung ist in den Figuren 3 und 4 genauer dargestellt: Die Figur 3 ist ein Schrägbild der Schutzvorrichtung, die Figuren 4A und 4B zeigen eine Seitenansicht der Schutzvorrichtung und einen Schnitt durch die Schutzvorrichtung in einer horizontalen Ebene.

Die Schutzvorrichtung 20 ist einstückig aus Chloropren-Kautschuk mit einer Härte von 67 Shore A gefertigt. Sie umfasst den erwähnten Hauptteil 21 und daran anschliessend einen konischen Abschnitt 24. Der Innenquerschnitt des Hauptteils ist elliptisch, die Hauptachse hat eine Länge von 112 mm, die Nebenachse eine Länge von 75 mm. Die Wandstärke beträgt im Hauptteil 21 10 mm. Der konische Abschnitt 24 ist durch einen Innenkonus 24a und einen Aussenkonus 24b gebildet, die beide in einer gemeinsamen Basisebene vom Hauptteil 21 der Schutzvorrichtung 20 ausgehen. Der Konuswinkel des Innenkonus 24a, also der Winkel zur zentralen Achse des Spritzschutzes 20, beträgt 11.6°, derjenige des Aussenkonus 24b 10.0°. Die Wandstärke des Innenkonus 24a beträgt 6 mm, diejenige des Aussenkonus 24b 8 mm.

Die Länge des Hauptteils beträgt 120 mm, die axiale Länge des konischen Abschnitts 24 80 mm, wobei der Innenkonus 24a und der Aussenkonus 24b in einer gemeinsamen Mündungsebene senkrecht zur Achse der Schutzvorrichtung 20 enden. Der Aussenkonus 24b weist an seinem unteren, freien Ende einen Wulst 24c auf, in welchem ein Ring 24d aus rostfreiem Stahl aufgenommen ist. Während die Schutzvorrichtung 20 eine gewisse Flexibilität aufweist, stellt der Ring 24d sicher, dass die Form der Mündung der Schutzvorrichtung 20 auch bei einwirkenden Kräften (z. B. durch anhaftenden Schnee usw.) erhalten bleibt bzw. die Schutzvorrichtung 20 nach einer temporären Verformung in ihre vorgegebene Form zurückkehrt.

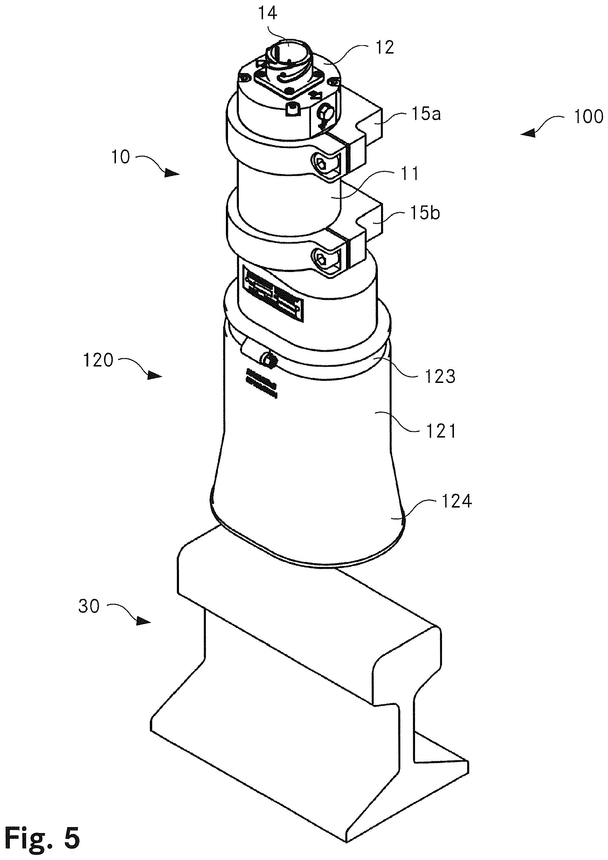

Die Figur 5 ist ein Schrägbild der Sensoreinrichtung mit einer zweiten Ausführungsform einer erfindungsgemässen Schutzvorrichtung und einem erfassten Schienenabschnitt. Die Sensoreinrichtung 1 ist identisch mit derjenigen, welche im Zusammenhang mit den Figuren 1 und 2 beschrieben wurde. Sie umfasst also ein Sensorgehäuse 10, an welchem hier die erfindungsgemässe Schutzvorrichtung 120 gemäss der zweiten Ausführungsform befestigt ist. Die Schutzvorrichtung 120 umfasst ein Gehäuse mit elliptischem Querschnitt. Die Sensoreinrichtung 100 ist derart am Schienenfahrzeug befestigt, dass die Hauptachse der Ellipse im Wesentlichen parallel ist zu einer Hauptausdehnung der erfassten Schiene 30.

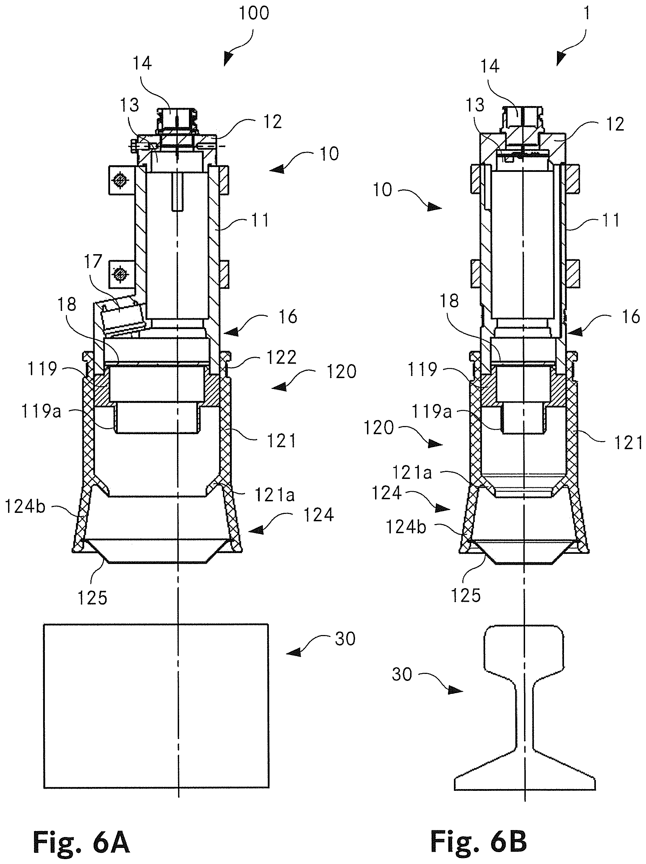

Die Figuren 6A und 6B zeigen vertikale Querschnitte durch die Sensoreinrichtung 100 entlang der Haupt- und der Nebenachse. Das Sensorgehäuse 10 und die darin aufgenommenen Komponenten entsprechen denjenigen der bereits oben, im Zusammenhang mit den Figuren 1 und 2, beschriebenen Sensoreinrichtung. Die Mündung des Aufnahmeteils 16 wird also wiederum durch einen Abschnitt mit der Geometrie eines Zylinders mit elliptischer Grundfläche gebildet, und daran ist ein Schutzglas 18 aus Borosilikatglas befestigt. Das Schutzglas 18 stützt sich über je einen elliptischen O-Ring an der hinteren Seite am Aufnahmeteil 16 und an der vorderen Seite an einem Rahmen 119 aus Aluminiumguss ab. Der Rahmen 119 ist durch mehrere umlaufend angeordnete, radial verlaufende Schrauben mit der Stirnseite des Aufnahmeteils 16 verschraubt und schliesst das Sensorgehäuse 10 nach vorne ab. Der Aussenquerschnitt des Rahmens 119 entspricht dem der Mündung benachbarten Aussenquerschnitt des Aufnahmeteils 16.

Im Unterschied zur ersten Ausführungsform gemäss den Figuren 1 und 2 umfasst der Rahmen 119 an seinem dem Schutzglas 18 abgewandten Ende ein Innenrohr 119a mit einem gleichbleibend elliptischen Querschnitt. Das Innenrohr 119a hat einen Innenquerschnitt mit einer Länge der Hauptachse von 72 mm und einer Länge der Nebenachse von 35 mm. Der Querschnitt des Innenrohrs 119a entspricht im Wesentlichen dem Öffnungsquerschnitt des Rahmens 119 und der Ausdehnung des Schutzglases 18. Die axiale Länge des Rahmens 119 und des Innenrohrs 119a, gemessen ausgehend vom Schutzglas, beträgt 65 mm. Die Aussenwand des Innenrohrs 119a und die Innenwand der Schutzvorrichtung 120 sind beabstandet.

Auf dem der Mündung benachbarten Abschnitt des Aufnahmeteils 16 und auf dem daran befestigten Rahmen 19 ist die Schutzvorrichtung 120 aufgeschoben. Diese umfasst einen Hauptteil 121 mit konstantem elliptischem Querschnitt, wobei der Innenquerschnitt dem Aussenquerschnitt des Aufnahmeteils 16 und des Rahmens 119 entspricht. Im Bereich des hinteren Endes des Hauptteils 121 der Schutzvorrichtung 120 ist eine umlaufende Nut 122 ausgespart. Diese nimmt eine Spannvorrichtung 123 in der Art einer an sich bekannten Schlauchschelle auf, welche beispielsweise ein ringförmiges Metallband und eine daran befestigte Stellschraube zum Spannen der Schelle umfasst (vgl. Figur 5). Die Schutzvorrichtung 120 lässt sich somit in verschiedenen axialen Positionen am Sensorgehäuse 10 positionieren und fixieren.

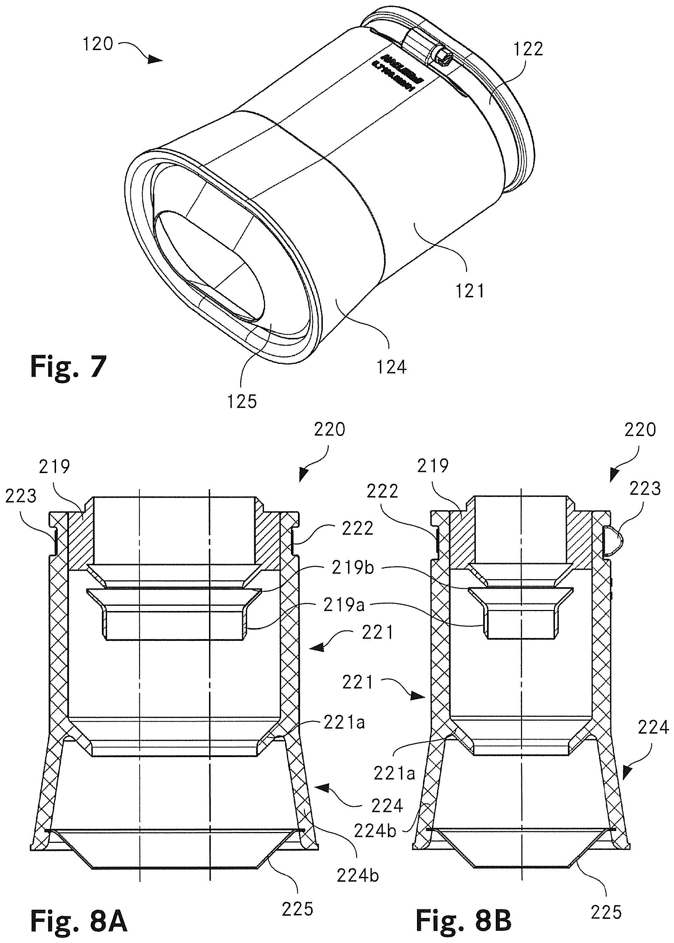

Die Figur 7 ist ein Schrägbild der Schutzvorrichtung 120. Diese ist einstückig aus Chloropren-Kautschuk mit einer Härte von 70 Shore A (CR 70) gefertigt. Sie umfasst den erwähnten Hauptteil 121 und daran anschliessend einen konischen Abschnitt 124. Der Innenquerschnitt des Hauptteils ist elliptisch, die Hauptachse hat eine Länge von 112 mm, die Nebenachse eine Länge von 75 mm. Die Wandstärke beträgt im Hauptteil 121 10 mm.

Am Übergang zwischen Hauptteil 121 und konischem Abschnitt 124 ist ein Innenkonus 121a ausgebildet. Der Konuswinkel gemessen zur Längsachse der Schutzvorrichtung 120 beträgt ca. 45°, in radialer Richtung ragt der konische Abschnitt 124 ausgehend vom Hauptteil 121 ca. 12 mm nach innen. Der konische Abschnitt 124 und das Innenrohr 119a sind so ausgebildet, dass auch in der obersten Position der Schutzvorrichtung 120 auf dem Sensorgehäuse 10 noch ein Zwischenraum zwischen dem Innenrohr 119a und dem konischen Abschnitt 124 vorhanden ist.

Der konische Abschnitt 124 umfasst einen einstückig mit dem Hauptteil 121 ausgebildeten Aussenkonus 124b. In einem mündungsnahen Bereich ist ein konischer Innentrichter 125 aus Chrom-Nickel-Stahl X5CrNi 18-10 eingegossen. Seine Mündungsform entspricht derjenigen der Mündung des konischen Abschnitts, die Hauptachse der Mündung hat eine Länge von 87 mm, die Nebenachse von 50 mm. Die axiale Ausdehnung des Innentrichters 125 beträgt 20 mm, er ragt in axialer Richtung ca. 10 mm über den Aussenkonus 124b hinaus. Der Winkel des Aussenkonus 124b zur Längsachse der Schutzvorrichtung 120 beträgt ca. 8.5°, der Winkel des Innentrichters 125 zur Längsachse der Schutzvorrichtung 120 beträgt ca. 45°. Die Wandstärke des Aussenkonus 124b beträgt 8 mm.

Die Länge des Hauptteils beträgt 120 mm, die axiale Länge des konischen Abschnitts 124 inklusive Innentrichter 125 70 mm. Während die Schutzvorrichtung 120 eine gewisse Flexibilität aufweist, stellt der metallische Innentrichter 125 nebst seiner Schutzfunktion gegen eindringenden Schmutz sicher, dass die Form der Mündung der Schutzvorrichtung 120 auch bei einwirkenden Kräften (z. B. durch anhaftenden Schnee usw.) erhalten bleibt bzw. die Schutzvorrichtung 120 nach einer temporären Verformung in ihre vorgegebene Form zurückkehrt.

Strömungstechnisch weist die Schutzvorrichtung 120 grundsätzlich drei Stufen auf:
1. den Bereich des Innentrichters 125;
2. eine Wirbelkammer im Hauptteil 121 und im konischen Abschnitt 124 der Schutzvorrichtung; und
3. den Bereich des Innenrohrs 119a.

Der Aussenkonus 124b räumt allfällige Schneemassen aus dem Messbereich und verhindert, dass Steine, Eis- oder Dreckpartikel direkt an den konusförmigen Innentrichter 125 treffen oder an ihm haften bleiben. Die Strömung des Fahrtwindes wird im Bereich der Kante des Aussenkonus 124b gebrochen. Die nach unten strömende Luft wird dann vom konusförmigen Innentrichter 125 über die Öffnung hinweg geleitet, wobei im Bereich des Totwassers des Innentrichters 125 eine bestimmte Menge des Luftstroms in die Öffnung gewirbelt wird. Der Öffnungsquerschnitt des Innentrichters 125 ist reduziert, um das Eindringen von Partikeln oder Spritzwasser in den Innenraum zu minimieren.

Die in die Öffnung der Schutzvorrichtung 120 strömende Luft wird in einer durch die Innenflächen des Innentrichters 125 und den ebenfalls konusförmigen Mantel des Aussenkonus 124b begrenzten Kammer zu einem in sich gefangenen Wirbel geformt. Einströmende Partikel setzen sich mehrheitlich in diesem Bereich an die Innenwand ab, so dass nur noch ein geringer Anteil in die nächste Stufe der Schutzvorrichtung 120 in Richtung Schutzglas vordringen kann.

Die restliche, aus der Wirbelkammer in Richtung Schutzglas strömende Luft wird in den Zwischenraum zwischen dem Innenrohr 119a und dem Mantel des Hauptteils 121 der Schutzvorrichtung 120 geleitet, das Innenrohr 119a schottet so das Schutzglas vor Verschmutzung ab. So wird zudem eine windstille Zone direkt über dem Schutzglas erzeugt.

Die Figuren 8A und 8B zeigen vertikale Querschnitte durch eine Schutzvorrichtung gemäss einer dritten Ausführungsform der Erfindung entlang der Haupt- und der Nebenachse.

Die Schutzvorrichtung 220 entspricht in vielerlei Hinsicht der im Zusammenhang mit den Figuren 5-7 beschriebenen zweiten Ausführungsform. Sie umfasst wiederum einen Hauptteil 221 mit konstantem elliptischem Querschnitt. Im Bereich des hinteren Endes des Hauptteils 221 der Schutzvorrichtung 220 ist eine umlaufende Nut 222 ausgespart. Diese nimmt eine Spannvorrichtung 223 in der Art einer an sich bekannten Schlauchschelle auf, welche beispielsweise ein ringförmiges Metallband und eine daran befestigte Stellschraube zum Spannen der Schelle umfasst. Die Schutzvorrichtung 220 lässt sich somit in verschiedenen axialen Positionen am Sensorgehäuse positionieren und fixieren.

Die Schutzvorrichtung 220 ist einstückig aus Chloropren-Kautschuk mit einer Härte von 70 Shore A (CR 70) gefertigt. Sie umfasst den erwähnten Hauptteil 221 und daran anschliessend einen konischen Abschnitt 224. Der Innenquerschnitt des Hauptteils ist elliptisch, die Hauptachse hat eine Länge von 112 mm, die Nebenachse eine Länge von 75 mm. Die Wandstärke beträgt im Hauptteil 221 10 mm.

Am Übergang zwischen Hauptteil 221 und konischem Abschnitt 224 ist ein Innenkonus 221a ausgebildet. Der Konuswinkel gemessen zur Längsachse der Schutzvorrichtung 220 beträgt ca. 45°, in radialer Richtung ragt der konische Abschnitt 224 ausgehend vom Hauptteil 221 ca. 12 mm nach innen.

Der konische Abschnitt 224 umfasst einen Aussenkonus 224b, In einem mündungsnahen Bereich ist ein konischer Innentrichter 225 aus Chrom-Nickel-Stahl X5CrNi18-10 eingegossen. Seine Mündungsform entspricht derjenigen der Mündung des konischen Abschnitts, die Hauptachse der Mündung hat eine Länge von 87 mm, die Nebenachse von 50 mm. Die axiale Ausdehnung des Innentrichters 225 beträgt 20 mm, er ragt in axialer Richtung ca. 10 mm über den Aussenkonus 224b hinaus. Der Winkel des Aussenkonus 224b zur Längsachse der Schutzvorrichtung 220 beträgt ca. 8.5°, der Winkel des Innentrichters 225 zur Längsachse der Schutzvorrichtung 220 beträgt ca. 45°. Die Wandstärke des Aussenkonus 224b beträgt 8 mm.

Die Länge des Hauptteils 221 beträgt 120 mm, die axiale Länge des konischen Abschnitts 224 inklusive Innentrichter 225 70 mm. Während die Schutzvorrichtung 220 eine gewisse Flexibilität aufweist, stellt der metallische Innentrichter 225 nebst seiner Schutzfunktion gegen eindringenden Schmutz sicher, dass die Form der Mündung der Schutzvorrichtung 220 auch bei einwirkenden Kräften (z. B. durch anhaftenden Schnee usw.) erhalten bleibt bzw. die Schutzvorrichtung 220 nach einer temporären Verformung in ihre vorgegebene Form zurückkehrt.

Ebenfalls in den Figuren 8A, 8B dargestellt ist der am Sensorgehäuse angebrachte Rahmen 219, auf welchen sich das Schutzglas des Sensors abstützt. Der Rahmen 219 ist wiederum aus Aluminiumguss gefertigt und durch mehrere umlaufend angeordnete, radial verlaufende Schrauben mit der Stirnseite des Aufnahmeteils des Sensorgehäuses verschraubt. Der Aussenquerschnitt des Rahmens 219 entspricht dem der Mündung benachbarten Aussenquerschnitt des Aufnahmeteils. Der Rahmen 219 umfasst wiederum an seinem dem Schutzglas abgewandten und der Schutzvorrichtung 220 zugewandten Ende ein Innenrohr 219a mit einem im Wesentlichen gleichbleibend elliptischen Querschnitt. Das Innenrohr 219a hat einen Innenquerschnitt mit einer Länge der Hauptachse von 72 mm und einer Länge der Nebenachse von 35 mm. Der Querschnitt des Innenrohrs 219a entspricht im Wesentlichen dem Öffnungsquerschnitt des Rahmens 219 und der Ausdehnung des Schutzglases. Die axiale Länge des Innenrohrs 219a beträgt 30 mm. Die Aussenwand des Innenrohrs 219a und die Innenwand der Schutzvorrichtung 220 sind beabstandet.

Im Gegensatz zur Ausführungsform gemäss den Figuren 5 und 6 ist das Innenrohr 219a mit einer Durchströmöffnung 219b ausgebildet. Dazu umfasst das Innenrohr 291a einen ersten, mit dem Basisteil des Rahmens 219 einstückig ausgeformten Abschnitt, welcher konisch zuläuft. An diesen ersten Abschnitt schliesst sich an der vom Sensorgehäuse abgewandten Seite ein zweiter konisch zulaufender Abschnitt an, der im Wesentlichen dieselben Dimensionen aufweist wie der erste Abschnitt. Der zweite Abschnitt ist über beabstandete, in einer Ebene senkrecht zur Längsachse des Innenrohrs 291a verlaufende Stege mit dem ersten Abschnitt verbunden, so dass in dieser Ebene die mit Ausnahme der Stege umlaufende Durchströmöffnung 219b gebildet ist. An der vom Sensorgehäuse abgewandten Seite schliesst sich an den zweiten Abschnitt zudem übergangslos ein dritter Abschnitt mit gleichbleibendem Querschnitt an.

Auch die Schutzvorrichtung 220 weist strömungstechnisch im Wesentlichen drei Stufen auf:
1. den Bereich des Innentrichters 225;
2. eine Wirbelkammer im Hauptteil 221 und im konischen Abschnitt 224 der Schutzvorrichtung; und
3. den Bereich des Innenrohrs 219a.

Der Aussenkonus 224b räumt allfällige Schneemassen aus dem Messbereich und verhindert, dass Steine, Eis- oder Dreckpartikel direkt an den konusförmigen Innentrichter 225 treffen oder an ihm haften bleiben. Die Strömung des Fahrtwindes wird im Bereich der Kante des Aussenkonus 224b gebrochen. Die nach unten strömende Luft wird dann vom konusförmigen Innentrichter 225 über die Öffnung hinweg geleitet, wobei im Bereich des Totwassers des Innentrichters 225 eine bestimmte Menge des Luftstroms in die Öffnung gewirbelt wird. Der Öffnungsquerschnitt des Innentrichters ist reduziert, um das Eindringen von Partikeln oder Spritzwasser in den Innenraum zu minimieren.

Die in die Öffnung der Schutzvorrichtung 220 strömende Luft wird in einer durch die Innenflächen des Innentrichters 225 und den ebenfalls konusförmigen Mantel des Aussenkonus 224b begrenzten Kammer zu einem in sich gefangenen Wirbel geformt. Einströmende Partikel setzen sich mehrheitlich in diesem Bereich an die Innenwand ab, so dass nur noch ein geringer Anteil in die nächste Stufe der Schutzvorrichtung 220 in Richtung Schutzglas vordringen kann.

Die restliche, aus der Wirbelkammer in Richtung Schutzglas strömende Luft wird in den Zwischenraum zwischen dem Innenrohr 219a und dem Mantel des Hauptteils 221 der Schutzvorrichtung 220 geleitet, das Innenrohr 219a schottet so das Schutzglas vor Verschmutzung ab. So wird zudem eine windstille Zone direkt über dem Schutzglas erzeugt. Die zusätzliche, nach aussen abgewinkelte Durchströmöffnung 219b im Innenrohr 219a führt zu einer vom Schutzglas weg führenden, zusätzlichen Luftzirkulation, die direkt in die Mündung des Innenrohrs 219a und damit auf das Schutzglas gerichtete Partikel ergreift und aus dem Innenrohr 219a hinausbläst.

Die Erfindung ist nicht auf das dargestellte Ausführungsbeispiel beschränkt. Insbesondere kann die Schutzvorrichtung auch in Kombination mit anders gestalteten oder aufgebauten Sensorgehäusen eingesetzt werden. Die Geometrie der Schutzvorrichtung kann sich ebenfalls von derjenigen des Ausführungsbeispiels unterscheiden. So können insbesondere der Innen- und der Aussenkonus in verschiedenen Ebenen beginnen und/oder enden, und das Verhältnis zwischen Haupt- und Nebenachse kann anders gewählt sein. Dasselbe gilt für das Verhältnis zwischen der radialen und der axialen Ausdehnung der Schutzvorrichtung und generell für die absoluten Grössenangaben.

Zusammenfassend ist festzustellen, dass durch die Erfindung eine Schutzvorrichtung für eine optische Sensoreinrichtung für Schienenfahrzeuge geschaffen wird, welche eine gute Schutzwirkung vor Verschmutzung bei hoher Signalqualität ermöglicht.

## Patentansprüche

1. Verwendung einer Schutzvorrichtung (20, 120, 220) für eine optische Sensoreinrichtung (1, 100) für Schienenfahrzeuge, umfassend ein Gehäuse, das röhrenartig ist, mit einem Basisteil (21, 121,221) und einem trichterartigen Frontteil (24, 124, 224), **dadurch gekennzeichnet, dass** im Bereich eines maximalen Aussenquerschnitts des Gehäuses in einer Ebene senkrecht zu einer Rohrachse des Gehäuses eine erste Ausdehnung grösser ist als eine zweite Ausdehnung, welche zur ersten Ausdehnung senkrecht steht, zum Schutz einer optischen Sensoreinrichtung an der Unterseite eines Schienenfahrzeugs vor Verschmutzung.

2. Verwendung einer Schutzvorrichtung (20, 120, 220) nach Anspruch 1, wobei das Gehäuse aus einem Synthesekautschuk gefertigt ist.

3. Verwendung einer Schutzvorrichtung (20, 120, 220) nach einem der Ansprüche 1 bis 2, **dadurch gekennzeichnet, dass** die erste Ausdehnung mindestens das 1.2-fache der zweiten Ausdehnung beträgt, bevorzugt mindestens das 1.33-fache.

4. Verwendung einer Schutzvorrichtung (20, 120, 220) nach einem der Anspruch 1 bis 3, **dadurch gekennzeichnet, dass** der Aussenquerschnitt des Gehäuses senkrecht zur Rohrachse entlang des Basisteils (21, 121, 221) und des trichterartigen Frontteils (24, 124, 224) eine elliptische Form besitzt.

5. Verwendung einer Schutzvorrichtung (20, 120, 220) nach einem der Ansprüche 1 bis 4, **dadurch gekennzeichnet, dass** der Frontteil (24, 124, 224) einen Innentrichter (125, 225) und einen Aussentrichter (24b, 124b, 224b) umfasst, wobei sich ein Querschnitt des Innentrichters (125, 225) in Richtung Frontöffnung verringert und sich ein Querschnitt des Aussentrichters (24b, 124b, 124b) in Richtung Frontöffnung vergrössert.

6. Verwendung einer Schutzvorrichtung (20, 120, 220) nach Anspruch 5, **dadurch gekennzeichnet, dass** in einem axialen Querschnitt ein Winkel zwischen Innentrichter (125, 225) und Aussentrichter (24b, 124b, 224b) 40 - 70°, bevorzugt 45 - 65°, beträgt.

7. Verwendung einer Schutzvorrichtung (20, 120, 220) nach Anspruch 5 oder 6, **dadurch gekennzeichnet, dass** der Innentrichter (125, 225) durch einen metallischen Einsatz gebildet ist.

8. Verwendung einer Schutzvorrichtung (20, 120, 220) nach einem der Ansprüche 5 bis 7, **dadurch gekennzeichnet, dass** der Innentrichter (125, 225) in axialer Richtung über den Aussentrichter (24b, 124b, 224b) hinausragt.

9. Verwendung einer Schutzvorrichtung (20, 120, 220) nach einem der Ansprüche 1 bis 8, **dadurch gekennzeichnet, dass** an einem Übergang zwischen Basisteil (21, 121, 221) und trichterartigem Frontteil (24, 124, 224) ein Innenkonus (24a, 121a, 221a) ausgebildet ist.

10. Verwendung einer Schutzvorrichtung (20, 120, 220) nach einem der Ansprüche 1 bis 9, **dadurch gekennzeichnet, dass** angrenzend an einen Befestigungsbereich für die optische Sensoreinrichtung (1, 100) ein zentrales Innenrohr (119a, 219a) angeordnet ist, dessen Wandung in einer dem Befestigungsbereich abgewandten Richtung von einer Wandung des Basisteils der Schutzvorrichtung (20,120, 220) beabstandet ist.

11. Verwendung einer Schutzvorrichtung (20, 120, 220) nach Anspruch 10, **dadurch gekennzeichnet, dass** die Wandung des Innenrohrs (119a, 219a) mindestens eine Durchströmöffnung (219b) umfasst.

12. Verwendung einer Schutzvorrichtung (20, 120, 220) nach Anspruch 1, wobei die optische Sensoreinrichtung (1, 100) für Schienenfahrzeuge ein Sensorgehäuse (10) und mindestens eine Schutzvorrichtung (20, 120, 220), welche am Sensorgehäuse (10) befestigt ist umfasst und
wobei das Sensorgehäuse (10) einen Frontabschnitt umfasst, dessen Aussenquerschnitt dem Innenquerschnitt eines sensorseitigen Endes des Basisteils (21, 121, 221) der Schutzvorrichtung (20, 120, 220) entspricht, so dass der Basisteil (21, 121, 221) auf den Frontabschnitt aufschiebbar ist.

13. Verwendung einer Schutzvorrichtung (20, 120, 220) nach Anspruch 12, **dadurch gekennzeichnet, dass** eine axiale Ausdehnung des Frontabschnitts derart ist, dass sich eine axiale Position der Schutzvorrichtung (20, 120, 220) in Bezug auf das Sensorgehäuse (10) verstellen lässt.

14. Verwendung einer Schutzvorrichtung (20, 120, 220) nach Anspruch 12 oder 13, **gekennzeichnet durch** ein umlaufendes Spannelement (23, 123, 223), welches einen auf den Frontabschnitt aufgeschobenen Bereich des Basisteils (21, 121, 221) umschliesst und zur Fixierung der Schutzvorrichtung (20, 120, 220) am Sensorgehäuse (10) spannbar ist.

15. Schienenfahrzeug mit einer Sensoreinrichtung (1) umfassend ein Sensorgehäuse (10) und mindestens eine Schutzvorrichtung (20, 120, 220) welche am Sensorgehäuse (10) befestigt ist, wobei die Schutzvorrichtung (20, 120, 220) ein Gehäuse, das röhrenartig ist, mit einem Basisteil (21, 121,221) und einem trichterartigen Frontteil (24, 124, 224) umfasst und wobei im Bereich eines maximalen Aussenquerschnitts des Gehäuses in einer Ebene senkrecht zu einer Rohrachse des Gehäuses eine erste Ausdehnung grösser ist als eine zweite Ausdehnung, welche zur ersten Ausdehnung senkrecht steht
**dadurch gekennzeichnet, dass** die Sensoreinrichtung (1) derart am Schienenfahrzeug und die Schutzvorrichtung (20, 120, 220) derart an der Sensoreinrichtung (1) angebracht sind, dass sich die erste Ausdehnung im Wesentlichen senkrecht zu einer Radachse von Laufrädern des Schienenfahrzeugs erstreckt.

## Claims

1. Use of a protective apparatus (20, 120, 220) for an optical sensor device (1, 100) for rail vehicles, comprising a tube-like housing with a base part (21, 121, 221) and a funnel-like front part (24, 124, 224), **characterized in that**, in the region of a maximum outer cross section of the housing, in a plane perpendicular to a tube axis of the housing, a first extent is greater than a second extent, which is perpendicular to the first extent, for protecting an optical sensor device on the bottom side of a rail vehicle against contamination.

2. Use of a protective apparatus (20, 120, 220) according to Claim 1, wherein the housing is produced from a synthetic rubber.

3. Use of a protective apparatus (20, 120, 220) according to either of Claims 1 and 2, **characterized in that** the first extent is at least 1.2 times, preferably at least 1.33 times, the second extent.

4. Use of a protective apparatus (20, 120, 220) according to one of Claims 1 to 3, **characterized in that** the outer cross section of the housing, perpendicular to the tube axis, has an elliptical shape along the base part (21, 121, 221) and the funnel-like front part (24, 124, 224).

5. Use of a protective apparatus (20, 120, 220) according to one of Claims 1 to 4, **characterized in that** the front part (24, 124, 224) comprises an inner funnel (125, 225) and an outer funnel (24b, 124b, 224b), wherein a cross section of the inner funnel (125, 225) is reduced in the direction of the front opening and a cross section of the outer funnel (24b, 124b, 124b) is increased in the direction of the front opening.

6. Use of a protective apparatus (20, 120, 220) according to Claim 5, **characterized in that**, in an axial cross section, an angle between the inner funnel (125, 225) and the outer funnel (24b, 124b, 224b) is 40-70°, preferably 45-65°.

7. Use of a protective apparatus (20, 120, 220) according to Claim 5 or 6, **characterized in that** the inner funnel (125, 225) is formed by a metallic insert.

8. Use of a protective apparatus (20, 120, 220) according to one of Claims 5 to 7, **characterized in that**, in an axial direction, the inner funnel (125, 225) projects beyond the outer funnel (24b, 124b, 224b) .

9. Use of a protective apparatus (20, 120, 220) according to one of Claims 1 to 8, **characterized in that** an inner cone (24a, 121a, 221a) is formed at a transition between the base part (21, 121, 221) and the funnel-like front part (24, 124, 224).

10. Use of a protective apparatus (20, 120, 220) according to one of Claims 1 to 9, **characterized in that** a central inner tube (119a, 219a) is arranged adjacent to a fastening region for the optical sensor device (1, 100), the wall of which inner tube is spaced apart from a wall of the base part of the protective apparatus (20, 120, 220) in a direction away from the fastening region.

11. Use of a protective apparatus (20, 120, 220) according to Claim 10, **characterized in that** the wall of the inner tube (119a, 219a) comprises at least one throughflow opening (219b).

12. Use of a protective apparatus (20, 120, 220) according to Claim 1, wherein the optical sensor device (1, 100) for rail vehicles comprises a sensor housing (10) and at least one protective apparatus (20, 120, 220) which is fastened to the sensor housing (10), and
wherein the sensor housing (10) comprises a front portion whose outer cross section corresponds to the inner cross section of a sensor-side end of the base part (21, 121, 221) of the protective apparatus (20, 120, 220), with the result that the base part (21, 121, 221) is able to be pushed onto the front portion.

13. Use of a protective apparatus (20, 120, 220) according to Claim 12, **characterized in that** an axial extent of the front portion is such that an axial position of the protective apparatus (20, 120, 220) with respect to the sensor housing (10) can be adjusted.

14. Use of a protective apparatus (20, 120, 220) according to Claim 12 or 13, **characterized by** a circumferential tensioning element (23, 123, 223) which surrounds a region of the base part (21, 121, 221) that has been pushed onto the front portion and which, for fixing the protective apparatus (20, 120, 220) to the sensor housing (10), is able to be tensioned.

15. Rail vehicle having a sensor device (1) comprising a sensor housing (10) and at least one protective apparatus (20, 120, 220) which is fastened to the sensor housing (10), wherein the protective apparatus (20, 120, 220) comprises a tube-like housing with a base part (21, 121, 221) and a funnel-like front part (24, 124, 224), and wherein, in the region of a maximum outer cross section of the housing, in a plane perpendicular to a tube axis of the housing, a first extent is greater than a second extent, which is perpendicular to the first extent,
**characterized in that** the sensor device (1) is attached in such a way to the rail vehicle, and the protective apparatus (20, 120, 220) is attached in such a way to the sensor device (1), that the first extent extends in a manner substantially perpendicular to a wheel axle of running wheels of the rail vehicle.

## Revendications

1. Utilisation d'un moyen de protection (20, 120, 220) pour un dispositif de capteur optique (1, 100) pour véhicules sur rails, comprenant un boîtier de forme tubulaire, doté d'une partie de base (21, 121, 221) et d'une partie avant en forme d'entonnoir (24, 124, 224), **caractérisée en ce que**, dans la zone d'une section transversale extérieure maximale du boîtier, dans un plan perpendiculaire à un axe de tube du boîtier une première étendue est supérieure à une deuxième étendue, laquelle est perpendiculaire à la première étendue, afin de protéger un dispositif de capteur optique contre les salissures sur la partie inférieure d'un véhicule sur rails.

2. Utilisation d'un moyen de protection (20, 120, 220) d'après la revendication 1, dans laquelle le boîtier est fabriqué en caoutchouc synthétique.

3. Utilisation d'un moyen de protection (20, 120, 220) d'après l'une des revendications 1 à 2, **caractérisée en ce que** la première étendue vaut au moins 1,2 fois la deuxième étendue, de préférence au moins 1,33 fois.

4. Utilisation d'un moyen de protection (20, 120, 220) d'après l'une des revendications 1 à 3, **caractérisée en ce que** la section transversale extérieure du boîtier possède une forme elliptique perpendiculairement à l'axe de tube le long de la partie de base (21, 121, 221) et de la partie avant en forme d'entonnoir (24, 124, 224).

5. Utilisation d'un moyen de protection (20, 120, 220) d'après l'une des revendications 1 à 4, **caractérisée en ce que** la partie avant (24, 124, 224) comprend un entonnoir intérieur (125, 225) et un entonnoir extérieur (24b, 124b, 224b), dans laquelle une section transversale de l'entonnoir intérieur (125, 225) se rétrécit dans la direction de l'ouverture avant et une section transversale de l'entonnoir extérieur (24b, 124b, 224b) s'élargit dans la direction de l'ouverture avant.

6. Utilisation d'un moyen de protection (20, 120, 220) d'après la revendication 5, **caractérisée en ce que** dans une section transversale axiale un angle entre l'entonnoir intérieur (125, 225) et l'entonnoir extérieur (24b, 124b, 224b) est de 40 - 70°, de préférence de 45 - 65°.

7. Utilisation d'un moyen de protection (20, 120, 220) d'après la revendication 5 ou 6, **caractérisée en ce que** l'entonnoir intérieur (125, 225) est formé par un insert métallique.

8. Utilisation d'un moyen de protection (20, 120, 220) d'après l'une des revendications 5 à 7, **caractérisée en ce que** l'entonnoir intérieur (125, 225) dépasse dans la direction axiale par le biais de l'entonnoir extérieur (24b, 124b, 224b).

9. Utilisation d'un moyen de protection (20, 120, 220) d'après l'une des revendications 1 à 8, **caractérisée en ce qu'**un cône intérieur (24a, 121a, 221a) est réalisé sur une jonction entre la partie de base (21, 121, 221) et la partie avant en forme d'entonnoir (24, 124, 224).

10. Utilisation d'un moyen de protection (20, 120, 220) d'après l'une des revendications 1 à 9, **caractérisée en ce qu'**un tube intérieur central (119a, 219a) est agencé de manière adjacente à une zone de fixation pour le capteur optique (1, 100), la paroi de ce tube étant à distance de la paroi de la partie de base du moyen de protection (20, 120, 220) dans une direction se détournant de la zone de fixation.

11. Utilisation d'un moyen de protection (20, 120, 220) d'après la revendication 10, **caractérisée en ce que** la paroi du tube intérieur (119a, 219a) comprend au moins une ouverture d'écoulement (219b).

12. Utilisation d'un moyen de protection (20, 120, 220) d'après la revendication 1, dans laquelle le dispositif de capteur optique (1, 100) pour véhicules sur rails comprend un boîtier de capteur (10) et au moins un moyen de protection (20, 120, 220), lequel est fixé sur le boîtier de capteur (10) et dans laquelle le boîtier de capteur (10) comprend une section avant, dont la section transversale extérieure correspond à la section transversale intérieure d'une extrémité côté capteur de la partie de base (21, 121, 221) du moyen de protection (20, 120, 220), de sorte que la partie de base (21, 121, 221) peut glisser sur la section avant.

13. Utilisation d'un moyen de protection (20, 120, 220) d'après la revendication 12, **caractérisée en ce qu'**une étendue axiale de la section avant est telle qu'une position axiale du moyen de protection (20, 120, 220) peut être ajustée par rapport au boîtier de capteur (10).

14. Utilisation d'un moyen de protection (20, 120, 220) d'après la revendication 12 ou 13, **caractérisée par** un élément de serrage périphérique (23, 123, 223), lequel entoure une zone de la partie de base (21, 121, 221) glissée sur la section avant et est serrable pour bloquer le moyen de protection (20, 120, 220) sur le boîtier de capteur (10).

15. Véhicule sur rail doté d'un dispositif de capteur (1) comprenant un boîtier de capteur (10) et au moins un moyen de protection (20, 120, 220), lequel est fixé sur le dispositif de capteur (1), dans lequel le moyen de protection (20, 120, 220) comprend un boîtier de forme tubulaire, doté d'une partie de base (21, 121, 221) et d'une partie avant en forme d'entonnoir (24, 124, 224), dans lequel, dans la zone d'une section transversale extérieure maximale du boîtier, dans un plan perpendiculaire à un axe de tube du boîtier une première étendue est supérieure à une deuxième étendue, laquelle est perpendiculaire à la première étendue, **caractérisé en ce que** le dispositif de capteur (1) est agencé sur le véhicule sur rail et le moyen de protection (20, 120, 220) est agencé sur le dispositif de capteur (1) de telle sorte que la première étendue est essentiellement perpendiculaire à un essieu de roues porteuses du véhicule sur rail.
